# EUROPÄISCHE PATENTSCHRIFT

(11) **EP 1 049 911 B1**
(45) Veröffentlichungstag und Bekanntmachung des Hinweises auf die Patenterteilung: **16.04.2003**
(21) Anmeldenummer: 99906149.2
(22) Anmeldetag: 18.01.1999
(51) Int. Cl.: G01C 19/72

(54) **VERFAHREN UND EINRICHTUNG ZUR STABILISIERUNG DES SKALENFAKTORS EINES FASEROPTISCHEN KREISELS**
METHOD AND DEVICE FOR STABILIZING THE SCALE FACTOR OF A FIBER OPTIC GYROSCOPE
PROCEDE ET DISPOSITIF POUR STABILISER LE FACTEUR D'ECHELLE D'UN GYROSCOPE A FIBRES OPTIQUES

(30) Priorität: 21.01.1998 DE 19802095
(43) Veröffentlichungstag der Anmeldung: 08.11.2000
(73) Patentinhaber: LITEF GmbH, 79115 Freiburg (DE)
(72) Erfinder: TSCHANUN, Wolfgang, D-79285 Ebringen (DE)
(74) Vertreter: Müller - Hoffmann & Partner
(86) Internationale Anmeldenummer: EP9900267
(87) Internationale Veröffentlichungsnummer: WO99037975

(56) Entgegenhaltungen:
- EP-A- 0 652 417
- DE-A- 3 148 925
- FR-A- 2 590 035

## Beschreibung

Die Erfindung betrifft ein Verfahren und eine Einrichtung zur Stabilisierung des Skalenfaktors eines faseroptischen Kreisels, der mit einer mehr oder weniger breitbandigen Lichtquelle, insbesondere mit einer Superlumineszenzdiode (SLD) oder einem multimoden Laser ausgestattet ist.

Bei bekannten faseroptischen Kreiseln (FOGs = Fibre Optic Gyros) neuerer Bauart werden häufig breitbandige SLDs ohne Begrenzung der Breitbandigkeit eingesetzt. Es wurde jedoch festgestellt, daß bei den bisher bekannten und für diesen Zweck eingesetzten SLDs Alterungseffekte sowie Schwankungen der momentanen Arbeitstemperatur der jeweiligen SLD zu erheblichen Schwankungen des Kreisel-Skalenfaktors führen, die für hochgenaue Kreisel nicht akzeptabel sind. Bisher wird versucht dieses Schwankungsproblem durch Messung der Temperatur am sogenannten Sensorblock des FOGs und an der Lichtquelle zur Korrektur des wellenlängenbedingten Fehlers zu begegnen. Diese relativ aufwendigen Modellierungen führen dann zu einer Eingrenzung der Wellenlängenunsicherheit, bewirken aber keine aktive Ausregelung dieser Unsicherheit. Die momentan festgestellten temperaturbedingten Wellenlängenschwankungen liegen in der Größenordnung von 300 nm/°C. Der Alterungseffekt hängt u.a. wesentlich vom jeweiligen Herstellungsprozeß ab.

Aus der GB 2 157 425 A ist eine Skalenfaktorstabilisierung bekannt, bei der ein faseroptischer Kreisel eine Temperaturkompensationsvorrichtung enthält, die die Wellenlänge der Laserstrahlung so einstellt, daß der Temperaturkoeffizient des Skalenfaktors minimiert wird, wodurch die von dem Kreisel abgegebenen Daten nicht durch die Temperaturveränderungen der Faser beeinflußt werden.

Aus der JP 08304084 A ist es bekannt, die Abweichung des Skalenfaktors eines optischen Kreisels mit einer elektronischen Signalverarbeitungsschaltung zu korrigieren. Hierzu wird die Änderung der Wellenlänge durch die Messung der Änderung des Polarisationsgrades detektiert, da sich der Polarisationsgrad des durch die verwendete doppelbrechende optische Faser laufenden Lichts verändert, wenn sich die Wellenlänge der Lichtquelle aufgrund von Temperaturänderungen ändert.

Aus der DE 34 29 592 A1 ist es bekannt, ein faseroptisches Gyroskop mit einer Temperaturkompensationsvorrichtung zu versehen, die auf die aufgespulte Faser einen thermischen Ausdehnungskoeffizienten aufprägt, der so gewählt ist, daß er im Wert etwa gleich dem Brechungsindexkoeffizienten der Faser ist, wodurch der Skalierungsfaktor-Temperaturkoeffizient vermindert wird. Die Temperaturkompensationsvorrichtung kann die Gestalt eines Formkörperelements aufweisen oder als Überzug auf die Faser aufgebracht werden.

Zur Verbesserung der Skalenfaktorgenauigkeit eines FOGs ist aus der Druckschrift CA-A-1,289,787 auch der Vorschlag bekannt, im Lichtweg vor dem Detektor ein auf die Schwerpunktwellenlänge der Lichtquelle zentriertes optisches Bandpaßfilter anzuordnen, dessen Bandbreite geringer ist als das Spektrum des von der Lichtquelle (SLD) emittierten Lichtstrahls.

Auf der Basis dieser Erkenntnis liegt der Erfindung die Aufgabe zugrunde die Skalenfaktorstabilität von FOGs auf einfache Weise zu verbessern.

Die erfindungsgemäße Lösung besteht bei einem Verfahren zur Skalenfaktorstabilisierung in einem faseroptischen Kreisel, bei dem die in ein Faserende eingestrahlte Emissionsbandbreite der Lichtquelle durch ein schmalbandiges optisches Filter auf eine wesentlich schmälere Transmissionsbandbreite begrenzt wird. erfindungsgemäß darin, daß die Transmissionsbandbreite des optischen Filters in Abhängigkeit von der an diesem Filter gemessenen Temperatur verändert bzw. verschoben wird und zwar vorzugsweise so, daß die temperaturabhängige Verschiebung (Modellierung) der Transmissionsbandbreite des optischen Filters auf für die Skalenfaktorberechnung angewandte Wellenlängenwerte entsprechend der gemessenen Filtertemperatur unter Verwendung von vorkalibrierten gespeicherten Werten erfolgt. Damit läßt sich eine aktive Nachführung über die Intensität erreichen. Zugleich kann die Temperatur des wellenlängenabhängigen Filters unmittelbar zur Skalenfaktorberechnung bzw. Skalenfaktorkorrektur herangezogen werden.

Eine erfindungsgemäße Einrichtung in einem faseroptischen Kreisel zur Stabilisierung des Skalenfaktors ist gekennzeichnet durch eine hinsichtlich ihrer Durchlaßcharakteristik auf den Wellenlängenbereich der Lichtquelle des Kreisels abgestimmte optische Filteranordnung im Lichtweg zur Begrenzung der Bandbreite des in die Faser geführten Lichts, wobei erfindungsgemäß eine Temperaturmeßeinrichtung, welche die aktuelle Temperatur der optischen Filteranordnung erfaßt und eine elektrische Einrichtung vorgesehen sind, mittels welcher der jeweils gemessene Temperaturwert über eine geeichte, gespeicherte als Look-up-Tabelle gemessene Temperatur-Wellenlängentabelle korrigiert und als korrigierter Wert zur Berechnung des Skalenfaktors über die Kreiselelektronik herangezogen wird. Vorzugsweise kommt ein dielektrisches optisches Filter zur Anwendung, beispielsweise in der Form eines optischen Interferenzfilters, ausgebildet als eine auf einem Glaskörper aufgebrachte dielektrische Beschichtung.

Weitere vorteilhafte Ergänzungen und Ausgestaltungen des erfindungsgemäßen Verfahrens bzw. der erfindungsgemäßen Einrichtung sind in den abhängigen Patentansprüchen definiert.

Mit der Erfindung wird erreicht, daß die Effekte der Temperaturdrift und der Kreiselalterung einschränkt werden. Von besonderem Vorteil ist, daß sofort nach dem Einschalten der Kreiselelektronik ein bereits gültiger Stabilisierungswert der Arbeitswellenlängen des FOGs für die Skalenfaktorregelung vorliegt. Dies ist für einige Anwendungsfälle, insbesondere in der Flugkörpertechnik von entscheidender Bedeutung. Eine derart rasche Skalenfaktorstabilisierung auch nach langer Lagerzeit des Flugkörpers läßt sich mit bekannten Maßnahmen nicht erreichen. Wie sich aus der weiteren Beschreibung ersehen läßt. kann eine erfindungsgemäße Anordnung bzw. Einrichtung einfach realisiert werden.

Ein Ausführungsbeispiel der Erfindung wird nachfolgend unter Bezug auf die Zeichnung näher erläutert. Es zeigen:
- **Fig. 1**: einen für die Erläuterung der Erfindung ausreichenden Minimalaufbau eines faseroptischen Kreisels, bei dem eine erfindungsgemäße Filteranordnung eingesetzt ist:
- **Fig. 2**: die Prinzipskizze der optischen Emissionskurve einer SLD bzw. der Transmissionskurve eines erfindungsgemäß verwendeten optischen Filters; und
- **Fig. 3**: ein Ausführungsbeispiel für eine Realisierung einer optischen Filteranordnung gemäß der Erfindung.

Wie bereits erwähnt, haben in FOGs verwendete SLDs eine vergleichsweise große Emissionsbandbreite von beispielsweise größer als 12 nm. Für breitbandige Laser als Lichtquelle liegt die anzunehmende Bandbreite in der Größenordnung von 8 bis 10 nm. Als eine der wesentlichen Ursachen eines sich im Laufe der Zeit verschlechternden Skalenfaktors wurde als Voraussetzung für die Erfindung erkannt, daß Alterungseinflüsse sowie Schwankungen der momentanen Arbeitstemperatur der verwendeten SLD einen erheblichen Einfluß auf die Schwankungen des Skalenfaktors haben. Gemäß der Erfindung wird nun eine Transmissionsanordnung in Form eines schmalbandigen optischen Filters in den optischen Weg, insbesondere des Lichts von der SLD zu einem ersten Strahlteiler und/oder vor dem Detektor eingebracht, wodurch die erwähnten Schwankungen der Lichtquelle vollständig oder zumindest weitgehend aufgefangen werden können. Die Drift des bandbegrenzenden optischen Elements wird dadurch weitgehend beseitigt, daß ein dieleketrisches optisches Filter vorgesehen wird, dessen Eigenschaften bekannt und in Abhängigkeit von der Temperatur modellierbar sind. Dazu wird die aktuelle Temperatur des optischen Filters (mit-)gemessen und über eine vorkalibrierte Look-up-Tabelle erfolgt eine Korrektur der Filterwerte, bevor der Wellenlängenwert für die Skalenfaktorberechnung herangezogen wird.

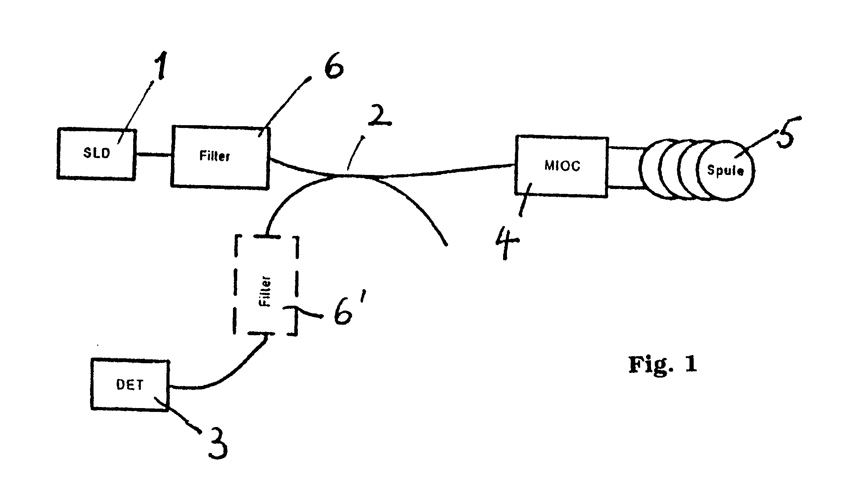

Wie sich aus der Prinzipskizze einer Minimalkonfiguration eines faseroptischen Interferometers gemäß Fig. 1 ersehen läßt, zu der eine SLD 1, ein Strahlteiler 2, ein integriert optischer Chip MIOC 4, eine Faserspule 5 sowie ein Interferenzbilder erfassender Detektor 3 gehören, ist zwischen der SLD 1 und dem Strahlteiler 2 und/oder in Rückwärtsrichtung zwischen dein Strahlteiler und dem Detektor 3 ein erfindungsgemäßes, modellierbares und die Emissionsbandbreite der SLD auf eine schmale Durchlaßkurve begrenzendes optisches Filter 6 bzw. 6' eingesetzt. Das Filter 6, 6' ist in Transmissionsstellung eingebaut.

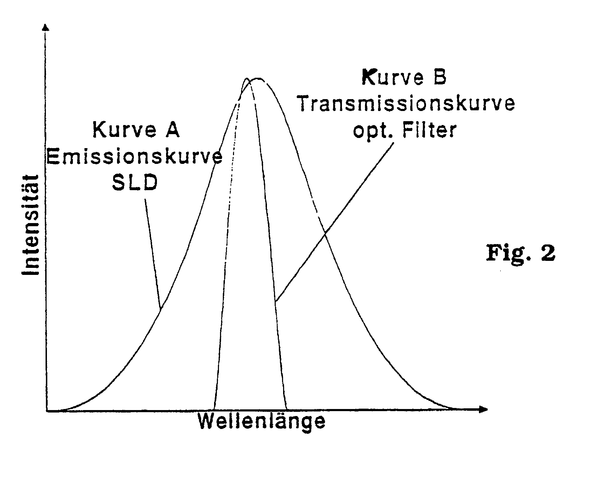

Die Fig. 2 verdeutlicht qualitativ die Relation in der Emissionskurve oder Emissionsbandbreite der SLD 1 (Kurve A) zur Transmissionskurve oder Transmissionsbandbreite des optischen Filters 6 bzw. 6' (Kurve B). Die schraffierte Fläche unter der Kurve B ergibt die gesamte optische Transmission der Lichtquelle über das Filter 6 bzw. 6' wieder.

Verschiebt sich aufgrund von Temperatur- oder Alterungseinflüssen die Kurve A, d.h. die Emissionskurve der Lichtwellenlänge, beispielsweise nach rechts oder links. so bleibt ersichtlicherweise die sich nur geringfügig ändernde Transmissionskurve B auf einem vorgegebenen Kalibrationswert und bestimmt somit die Schwerpunktlage der durchgelassenen optischen Intensität.

Zur weiteren Verbesserung empfiehlt sich außerdem die Realisierung einer Temperaturmessung am Filter 6 bzw. 6'. Dazu wird das optische Filter 6, 6' in engen Kontakt mit einem temperatursensierenden Element gebracht. Der gemessene Temperaturwert läßt sich dann über eine geeichte Temperatur-Wellenlängentabelle korrigieren und in der Kreiselelektronik mittels entsprechender "Fangalgorithmen" weiterverarbeiten. Dies läßt sich an einem Beispiel veranschaulichen: Wird der Strom der SLD beispielsweise ebenfalls aufgrund der üblicherweise vorgesehenen Temperaturmessung kontinuierlich erhöht, so nimmt die Intensität stark zu, und zwar so, daß die SLD im Bereich des optisch günstigsten Durchlasses betrieben wird. Eine häufig nur geringfügige weitere Stromerhöhung bewirkt jedoch einen starken Abfall der optischen Leistung. Dieser Effekt wird in einem elektronischen Regelkreis zur Stabilisierung der Wellenlänge herangezogen, wobei die zu berücksichtigende Drift der Wellenlänge vor allem von der Temperatur des optischen Filters abhängt. Wie erwähnt, wird diese Temperatur-Wellenlängenabhängigkeit durch eine Look-up-Tabelle elektronisch zu einer sehr genauen Berechnung des entsprechenden Skalenfaktors mitberücksichtigt. Wird zusätzlich das Filter hermetisch gepackt und entsprechend optisch verkittet, so läßt sich ein Wandern der Filterdurchlaßkurve weitestgehend verhindern, ebenso Alterungseffekte.

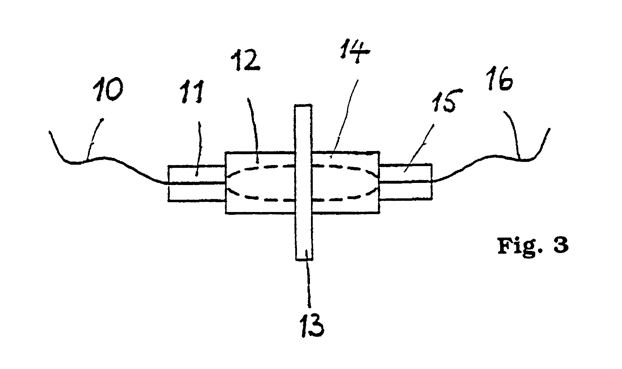

Eine technische Realisierung einer optischen Filteranordnung gemäß der Erfindung ist in der Skizze der Fig. 3 wiedergegeben. Eine optische Eingangsfaser 10 ist mit einem freien Ende in einen Faserträger 11 eingeklebt, an den sich eine erste Brechungsindexgradientenllnse (Selfoc®-Linse) 12 anschließt. Die Öffnung des optischen Wegs ist durch Strichlinien veranschaulicht. Eine spiegelbildliche Anordnung umfaßt eine optische Ausgangsfaser 16, deren eines freies Ende ebenfalls in einen Faserträger 15 eingeklebt ist. an den sich eine weitere Brechungsindexgradientenlinse 14 anschließt. Zwischen den beiden aufeinander ausgerichteten Linsen 12 und 14 ist ein optisches Interferenzfilter 13 eingesetzt, realisiert durch eine dielektrische Beschichtung auf einem geeigneten Glaskörper.

Bei Verwendung der erfindungsgemäßen Filteranordnung läßt sich eine erhebliche Verbesserung der Skalenfaktorstabilität bei faseroptischen Kreiseln hoher Güte erreichen.

## Patentansprüche

1. Verfahren zur Skalenfaktorstabilisierung eines faseroptischen Kreisels, bei dem die in ein Faserende eingestrahlte Emissionsbandbreite der Intensitätskennlinie der Lichtquelle des Kreisels durch ein schmalbandiges optisches Filter auf eine wesentlich schmälere Transmissionsbandbreite begrenzt wird, **dadurch gekennzeichnet, daß** die Transmissionsbandbreite des optischen Filters in Abhängigkeit von der an diesem Filter gemessenen Temperatur nachjustiert wird.

2. Verfahren nach Anspruch 1, **dadurch gekennzeichnet, daß** die Intensitätskennlinie der aktuellen Lichtwellenlänge über die Temperatur gemessen und zur aktiven elektronischen Nachführung der Transmissionsbandbreite des optischen Filters genutzt wird.

3. Verfahren nach Anspruch 2, **dadurch gekennzeichnet, daß** die temperaturabhängige Korrektur der Transmissionsbandbreite des optischen Filters auf für die Skalenfaktorberechnung angewendete Wellenlängenwerte entsprechend der gemessenen Filtertemperatur unter Verwendung von vorkalibrierten gespeicherten Werten erfolgt.

4. Einrichtung in einem faseroptischen Kreisel zur Stabilisierung des Skalenfaktors mittels einer hinsichtlich ihrer Durchlaßcharakteristik auf den Wellenlängenbereich der Lichtquelle (1) des Kreisels abgestimmte optische Filteranordnung (6) im Lichtweg zur Begrenzung der Bandbreite des in der Faser geführten Lichts, **gekennzeichnet durch** eine Temperaturmeßeinrichtung, welche die aktuelle Temperatur der optischen Filteranordnung mißt, und eine Einrichtung, mittels der der jeweils gemessene Temperaturwert über eine geeichte, gespeicherte Temperatur-Wellenlängentabelle (Look-up-Tabelle) korrigiert und als korrigierter Wert zur Berechnung des Skalenfaktors über die Kreiselelektronik herangezogen wird.

5. Einrichtung nach Anspruch 4, **dadurch gekennzeichnet, daß** die Filteranordnung (6) im Lichtweg vor einem ersten Strahlteiler (2) angeordnet ist.

6. Einrichtung nach Anspruch 4 oder 5, **dadurch gekennzeichnet, daß** die Filteranordnung (6) und/oder eine zusätzliche Filteranordnung (6') im Lichtweg vom ersten Strahlteiler (2) zu einem elektrooptischen Detektor (3) angeordnet ist.

7. Einrichtung nach Anspruch 4, **dadurch gekennzeichnet, daß** das Filterelement innerhalb der Filteranordnung (6) als dieleketrisches optisches Filter ausgebildet ist.

8. Einrichtung nach Anspruch 4 oder 7, **dadurch gekennzeichnet, daß** das Filterelement innerhalb der Filteranordnung als optisches Interferenzfilter durch eine auf einem Glaskörper aufgebrachte dielektrische Beschichtung ausgebildet ist.

9. Einrichtung nach Anpsruch 8, **dadurch gekennzeichnet, daß** die Filteranordnung zwischen einer Eingangsfaser (10) und einer Ausgangsfaser (16) folgende optische Elemente aufweist:
- eine an die Eingangsfaser (10) angekoppelte erste Brechungsindexgradientenlinse (12),
- eine zweite an die Ausgangsfaser (16) angekoppelte Brechungsindexgradientenlinse (14) und
- das zwischen den Brechungsindexgradientenlinsen angeordnete Interferenzfilter (13).

10. Einrichtung nach einem der vorstehenden Ansprüche 5 bis 9, **dadurch gekennzeichnet, daß** die dielektrischen Kennwerte der optischen Filteranordnung (6) in Abhängigkeit von der am Filter gemessenen Temperatur veränderbar sind.

11. Einrichtung nach Anspruch 9, **dadurch gekennzeichnet, daß** die Filteranordnung aus optisch verkitteten Elementen und in hermetisch gepackter Bauform realisiert ist.

12. Einrichtung nach Anspruch 11. **dadurch gekennzeichnet, daß** ein in die Filteranordnung integrierter Temperaturfühler vorhanden ist.

## Claims

1. Method for scale factor stabilization of a fibre-optic gyro, in which the emission bandwidth, injected into a fibre end, of the intensity characteristic of the light source of the gyro is limited by a narrowband optical filter to a considerably narrower transmission bandwidth, **characterized in that** the transmission bandwidth of the optical filter is readjusted as a function of the temperature measured at this filter.

2. Method according to Claim 1, **characterized in that** the intensity characteristic of the instantaneous light wavelength is measured with respect to the temperature and is used for active electronic readjustment of the transmission bandwidth of the optical filter.

3. Method according to Claim 2, **characterized in that** the temperature-dependent correction of the transmission bandwidth of the optical filter to wavelength values used for the scale factor calculation is carried out on the basis of the measured filter temperature, using pre-calibrated stored values.

4. Device in a fibre-optic gyro for stabilization of the scale factor by means of an optical filter arrangement (6), whose passband characteristic is matched to the wavelength band of the light source (1) of the gyro, in the light path in order to limit the bandwidth of the light carried in the fibre, **characterized by** a temperature measurement device which measures the instantaneous temperature of the optical filter arrangement, and a device by means of which the respectively measured temperature value is corrected using a calibrated, stored temperature wavelength table (look-up table) and is used as a corrected value for calculating the scale factor via the gyro electronics.

5. Device according to Claim 4, **characterized in that** the filter arrangement (6) is arranged in the light path upstream of a first beam splitter (2).

6. Device according to Claim 4 or 5, **characterized in that** the filter arrangement (6) and/or an additional filter arrangement (6') are/is arranged in the light path from the first beam splitter (2) to an electro-optical detector (3).

7. Device according to Claim 4, **characterized in that** the filter element within the filter arrangement (6) is designed as a dielectric optical filter.

8. Device according to Claim 4 or 7, **characterized in that** the filter element within the filter arrangement is designed as an optical interference filter, by means of a dielectric coating which is applied on a glass body.

9. Device according to Claim 8, **characterized in that** the filter arrangement between an input fibre (10) and an output fibre (16) has the following optical elements:
- a first refractive index gradient lens (12) which is coupled to the input fibre (10),
- a second refractive index gradient lens (14) which is coupled to the output fibre (16), and
- the interference filter (13) which is arranged between the refractive index gradient lenses.

10. Device according to one of the preceding claims 5 to 9, **characterized in that** the dielectric characteristics of the optical filter arrangement (6) can be varied as a function of the temperature measured at the filter.

11. Device according to Claim 9, **characterized in that** the filter arrangement is formed from optically bonded elements, and is in a hermetically sealed packaged form.

12. Device according to Claim 11, **characterized in that** a temperature sensor is provided, and is integrated in the filter arrangement.

## Revendications

1. Procédé pour la stabilisation du facteur d'échelle d'un gyroscope à fibre optique dans lequel la largeur de bande d'émission de la caractéristique d'intensité de la source lumineuse du gyroscope qui est injectée dans une extrémité de fibre est limitée à une largeur de bande de transmission beaucoup plus étroite par un filtre optique à bande étroite, **caractérisé en ce que** la largeur de bande de transmission du filtre optique est rajustée en fonction de la température mesurée sur ce filtre.

2. Procédé selon la revendication 1, **caractérisé en ce que** la caractéristique d'intensité de la longueur d'onde lumineuse actuelle est mesurée en fonction de la température et utilisée pour le rattrapage électronique actif de la largeur de bande de transmission, du filtre optique.

3. Procédé selon la revendication 2, **caractérisé en ce que** la correction fonction de la température de la largeur de bande de transmission du filtre optique s'effectue pour les valeurs de longueur d'onde utilisées pour le calcul du facteur d'échelle en fonction de la température de filtre mesurée, avec utilisation de valeurs mémorisées préalablement étalonnées.

4. Dispositif dans un gyroscope à fibre optique pour la stabilisation du facteur d'échelle, au moyen d'un dispositif de filtre optique (6) accordé, pour sa caractéristique de transmission, sur la gamme de longueur d'onde de la source lumineuse (1) du gyroscope, sur le trajet de la lumière pour la limitation de la largeur de bande de la lumière passant dans la fibre, **caractérisé par** un dispositif de mesure de la température qui mesure la température actuelle du dispositif de filtre optique, et un dispositif au moyen duquel la valeur de température mesurée à chaque fois est corrigée par l'intermédiaire d'un tableau de longueur d'onde-températures étalonnées, mémorisées (table à consulter) et utilisé comme valeur corrigée pour le calcul du facteur d'échelle par l'intermédiaire de l'électronique du gyroscope.

5. Dispositif selon la revendication 4, **caractérisé en ce que** le dispositif de filtre (6) est disposé, sur le trajet de la lumière, en amont d'un premier diviseur de faisceau (2).

6. Dispositif selon la revendication 4 ou 5, **caractérisé en ce que** le dispositif de filtre (6) et/ou un dispositif de filtre supplémentaire (6') sont disposés dans le trajet de la lumière allant du premier diviseur de faisceau (2) à un détecteur électro-optique (3).

7. Dispositif selon la revendication 4, **caractérisé en ce que** l'élément de filtre est disposé à l'intérieur du dispositif de filtre (6) en qualité de filtre optique diélectrique.

8. Dispositif selon la revendication 4 ou 7, **caractérisé en ce que** l'élément filtrant situé à l'intérieur du dispositif de filtre est réalisé sous la forme d'un filtre optique à interférence grâce à un revêtement diélectrique appliqué sur un corps en verre.

9. Dispositif selon la revendication 8, **caractérisé en ce que** l'agencement de filtre entre une fibre d'entrée (10) et une fibre de sortie (16) présente les éléments optiques suivants :
- une première lentille à gradient d'indice de réfraction (12) accouplée à la fibre d'entrée (10)
- une deuxième lentille à gradient d'indice de réfraction (14) accouplée à la fibre de sortie (16) et
- le filtre d'interférence (13) disposé entre les lentilles à gradient d'indice de réfraction.

10. Dispositif selon l'une des revendications précédentes 5 à 9, **caractérisé en ce que** les caractéristiques diélectriques du dispositif de filtre optique (6) peuvent être modifiées en fonction de la température mesurée sur le filtre.

11. Dispositif selon la revendication 9, **caractérisé en ce que** le dispositif de filtre est réalisé à partir d'éléments optiquement collés et dans une forme de construction encapsulée hermétiquement.

12. Dispositif selon la revendication 11, **caractérisé en ce qu'**il est prévu un capteur de température intégré dans le dispositif de filtre.
